**Europäisches Patentamt**

**European Patent Office**

**Office européen des brevets**

(19)

(11) Veröffentlichungsnummer: **0 200 927 B1**

(12) **EUROPÄISCHE PATENTSCHRIFT**

(45) Veröffentlichungstag der Patentschrift: **27.02.91**

(51) Int. Cl.⁵: **H02G  3/04**

(21) Anmeldenummer: **86104623.3**

(22) Anmeldetag: **04.04.86**

(54) **Kabelkanalprofil zur Verlegung von Installationsleitungen od. dgl.**

(30) Priorität: **04.05.85 DE 3516149**

(43) Veröffentlichungstag der Anmeldung:
**12.11.86 Patentblatt  86/46**

(45) Bekanntmachung des Hinweises auf die
Patenterteilung:
**27.02.91 Patentblatt  91/09**

(84) Benannte Vertragsstaaten:
**AT BE CH DE FR GB IT LI LU NL SE**

(56) Entgegenhaltungen:
**DE-B- 1 236 621**
**US-A- 3 761 603**

(73) Patentinhaber: **Item Industrietechnik und Maschinenbau GmbH**
**Friedenstrasse 107-109**
**D-5650 Solingen 11(DE)**

(72) Erfinder: **Rixen, Edgar**
**Taunusstrasse 14**
**D-5650 Solingen 11(DE)**

(74) Vertreter: **Sturies, Herbert et al**
**Patentanwälte Dr. Ing. Dipl. Phys. Herbert
Sturies Dipl. Ing. Peter Eichler Postfach 20
12 42**
**D-5600 Wuppertal 2(DE)**

## Beschreibung

Die Erfindung bezieht sich auf ein Kabelkanalprofil zur Verlegung von Installationsleitungen od.dgl., mit einem U-förmigen Kanalkörper, der aus einem Boden und zwei damit lösbar verbundenen Kanalwänden besteht, und mit einem die von den Kanalwänden gebildete Installationsöffnung verschließenden abnehmbaren Deckel, der an den Enden der Kanalwände insbesondere außen befestigt ist, wobei der Boden, die Wände und der Deckel ein Baukastensystem bilden.

Herkömmliche Kabelkanalprofile werden mit einem U-förmigen Kanalkörper an einer Wand od.dgl. befestigt, mit den zu verlegenden Installationsleitungen bestückt und durch einen Deckel verschlossen, der die Kanalwände außen umklammert. Ein solches Kabelkanalprofil hat einen vorbestimmten unveränderbaren Querschnitt, so daß für unterschiedliche Installationszwecke entsprechend unterschiedlich bemessene Kabelkanalprofile zur Verfügung stehen müssen.

Aus der DE-B-I 236 621 ist ein Kabelkanalprofil mit den eingangs genannten Merkmalen bekannt. Zum Aufbau unterschiedlicher Kanalgesamtquerschnitte werden in ihrer Dimensionierung ungeänderte Baukastenelemente eingesetzt. Es ist erforderlich, eine ganz bestimmte Querschnittsform dieser Elemente einzuhalten und sie insbesondere in immer gleicher Länge zu verwenden, um die gewünschten Querschnittsformen aufbauen zu können.

Aus der US-A-3 761 603 ist ein im wesentlichen quadratisches Kabelkanalprofil bekannt, das aus einem profilierten Boden, einem gleich profilierten Deckel und deren Verbindung dienenden, gleich profilierten Kanalwänden besteht. Die Kanalwände weisen für Boden und Deckel unterschiedliche Verrastungen auf, um den Deckel leicht von den Kanalwänden trennen zu können, ohne dabei die Rastverbindungen zwischen den Kanalwänden und dem Boden zu lösen.

Der Erfindung liegt die Aufgabe zugrunde, ein Kabelkanalprofil mit den eingangs genannten Merkmalen so zu verbessern, daß es unter teilweiser Weiterverwendung seiner Bestandteile universeller einsetzbar ist, um größere oder kleinere Mengen von Installationsleitungen in unterschiedlichen Kanalquerschnitten verlegen zu können.

Diese Aufgabe wird dadurch gelöst, daß die Baukastenelemente Boden, Wände und Deckel unterschiedlich dimensioniert vorhanden sind und daß die Querschnittslängen des Kabelkanalprofils mit einem Rastermaß im Verhältnis 1:1 oder einem ganzzahligen Vielfachen stehen.

Für die Erfindung ist von Bedeutung, daß die Kanalwände austauschbar sind. Es können Kanalwände und Böden anderer Dimensionen verwendet werden und es kann damit ein Kabelkanalprofil anderen Querschnitts hergestellt werden. Die Verbindung der Kanalwände und des Bodens erfolgt über Rastverbindungen. Nach Lösen der Rastverbindungen durch vorteilhafte Schwenk- oder Schiebebewegungen quer zur Längsachse des Profils kann der Teileaustausch vorgenommen werden. Es ist denkbar, anstelle der Rastverbindungen Schiebeverbindungen einzusetzen, so daß die zusammenzubauenden Teile in ihrer Längsrichtung durch Ineinanderschieben zusammengebaut werden. Eine derartige Ausbildung der Verbindungsstellen hat aber mehrere Nachteile, vor allem die zum Zusammenbau erforderliche doppelte Montagelänge, aber auch den nicht auszuschließenden Bewegungswiderstand durch Verwerfung der Teile quer zu ihrer Längsrichtung.

Da die Querschnittslängen des Kabelkanalprofils mit einem Rastermaß im Verhältnis 1:1 oder einem ganzzahligen Vielfachen stehen, ist es möglich, ein Kabelkanalprofilsystem herzustellen, das den Anforderungen nach Vielfältigkeit der gewünschten Querschnitte und der Befestigungs- und Verwendungsmöglichkeiten genügt.

Es kann auch der Deckel an den Kanalwänden über Rastverbindungen austauschbar befestigt sein, so daß bei entsprechender Formgestaltung also das Innere des Deckels zur Verlegung von Installationsleitungen herangezogen werden kann. Das könnte insbesondere für Nachinstallationen von Interesse sein, bei denen der einmal unter Einbezug der Wände hergestellte Installationsaufbau nicht geändert oder überhaupt beeinflußt werden soll, z. B. weil der Ausbau der Kanalwände zu aufwendig ist.

Der Boden des Kanalkörpers und/oder dessen Deckel haben an ihren Außenkanten in die Richtungen der Kanalwände weisende Widerlagerleisten, die von in das Kanalinnere vorspringenden Hakenleisten hintergriffen sind. Damit erfolgt die Verrastung vorteilhafterweise an den Kanten bzw. im Eckbereich des Profils. Die Hakenleisten einer Rastverbindung einer Kanalwand weisen einen Druckstag auf, der beim Verhaken der zusammenwirkenden Haken- und Widerlagerleisten unter Überwindung eines Raststegs in eine Rastausnehmung einrastbar ist. Derartige Rastverbindungen gewährleisten einen sicheren Zusammenhalt der zu verrastenden Bauteile, also insbesondere des Bodens mit seien Wänden, aber auch des Deckels, wobei die Rastverbindung so ausgestaltet ist, daß sie die zugehörige Kanalwand im Sinne einer Verspannung einer anderen Rastverbindung oder einer sonstigen lösbaren Verbindung eines Kanalteils mit einem anderen Kanalteil vorzuspannen vermag.

Um einen leichtgängigen Zusammenbau zu erreichen, weisen die Haken- und Widerlagerleisten kugelgelenkartigen Querschnitt auf.

Die Widerlagerleisten des Bodens und des Deckels sowie die Hakenleisten der Kanalwände sind in ihrem Eingriffsbereich jeweils gleich ausgebildet. Infolgedessen können die Rastverbindungen des Bodens und des Deckels vertauscht werden bzw. die Kanalwände sind in ihrer Ebene um 180° gerdreht anzuordnen. Bei unterschiedlicher Ausbildung der Rastverbindungen einer Kanalwand bzw. wenn an einer Kanalwand nur eine einen Drucksteg aufweisende und damit die Kanalwand vorspannende Rastverbindung vorhanden ist, kann diese wahlweise auch am Deckel des Kabelkanalprofils angewendet werden. Vorteilhafterweise weisen der Boden und der Deckel des Kabelkanals für jede Rastverbindung einen in das Kanalinnere vorspringenden Raststegträger mit je einer Rastausnehmung und einem Raststeg auf. Diese Raststegträger sind gleich profiliert, so daß identisch profilierte Haken- und Widerlagerleisten sowie Druckstege für alle Rastverbindungsstellen gleichermaßen zu verwenden sind.

Um das Kabelkanalprofil in einfacher Weise befestigen zu können, sind die Raststegträger des Bodens mit einem bedarfsweise Betätigungsöffnungen aufweisenden Verbindungssteg tragend miteinander zu einem Rinnenprofil verbunden, und im Boden ist ein längsdurchlaufender, in eine von dem Rinnenprofil umschlossene Befestigungsnut mündender Befestigungsschlitz angeordnet. Das Rinnenprofil ermöglicht die Anordnung eines ununterbrochen längsdurchlaufenden Befestigungsschlitzes, mit dem das Kabelkanalprofil stufenlos an tragendem Untergrund zu befestigen ist.

Um größere, nämlich breitere Kabelkanalprofile herzustellen, hat der Boden mindestens zwei nebeneinander angeordnete Rinnenprofile, zwischen denen zwei auf deren Raststegträger abgestimmte Widerlagerleisten angeordnet sind. Beide Rinnenprofile erlauben jeweils die vorbeschriebene Befestigung des Kabelkanalprofils. Darüberhinaus ist das Kanalinnere von einer Zwischenwand unterteilt, die mit dem Boden über eine Rastverbindung lösbar verbunden ist. Das ist beispielsweise erforderlich, um Starkstrom- und Schwachstrominstallationsleitungen voneinander zu trennen. Vorteilhafterweise sind die Zwischenwand und die Kanalwände gleich ausgebildet, was die Herstellung und die Lagerhaltung von Zwischenwänden erleichtert.

Um den Aufbau des Kabelkanalprofils zu vereinfachen, hat der Boden des Kanalkörpers Deckelquerschnitt, oder der Deckel hat Bodenquerschnitt, wenn dies bei Spezialverwendungszwecken erforderlich ist. Die Vertauschbarkeit von Deckel und Boden wird vorteilhafterweise derart eingesetzt, daß in der Längsrichtung des Kabelkanalprofils längenabschnittweise ein Deckelquerschnitt anstelle eines Bodenquerschnitts vorhanden ist. Auf einem Längenabschnitt könnte also ein Deckelstück an die Stelle eines Bodenstücks treten, beispielsweise wenn keine Befestigungsmöglichkeit gegeben ist und ein einfaches und damit preiswerteres Profil ausreicht, oder wenn mit einem einfachen Deckelprofil Austrittsöffnungen hergestellt werden sollen. In ähnlicher Weise ist in der Längsrichtung des Kabelkanalprofils mindestens ein mit mindestens einer Seitenaustritts- und/oder Belüftungsöffnung versehener separater Kanalwandabschnitt vorhanden, beispielsweise um einen durch die Seitenaustrittsöffnungen verlegten Kabelbaum leicht ausbauen zu können, ohne die Kanalwand insgesamt ausbauen zu müssen. Bei den herkömmlichen Kabelkanälen wird dieses Ziel dadurch erreicht, daß das Kabelkanalprofil über seine gesamte Länge in Abständen geschlitzt wird, so daß die dadurch entstandenen einzelnen Lappen an der jeweils gewünschten Stelle ausgebrochen werden können. Das Schlitzen ist jedoch ein zeitaufwendiger Herstellungsvorgang und durch die Schlitze wird die Kanalwandsteifigkeit herabgesetzt. Beides kann durch die Verwendung der vorgenannten Kanalwandabschnitte vermieden werden.

In Weiterbildung der Erfindung ist das Kabelkanalprofil mit einem Hohlprofilstab lösbar verbunden, dessen Querschnittslängen auf die des Kabelkanals abgestimmt sind und der mindestens einen mit dem Befestigungsschlitz des Kabelkanals deckungsgleich angeordneten Befestigungskanal zur Aufnahme eines Verbindungsteils aufweist. Dadurch ist das Kabelkanalprofil mit einem Träger versehen, mit dem es bei Fehlen sonstiger Befestigungsmöglichkeiten insbesondere auch über größere Längen frei verlegt werden kann. Auch die Befestigung des Kabelkanalprofils an Gestellen, die aus derartigen Hohlprofilstäben aufgebaut sind, ist ohne weiteres möglich und erleichtert z.B. das Herstellen von Arbeitstischen unter Verwendung derartiger Hohlprofilstäbe und Kabelkanalprofile. Das kabelkanalprofil kann auch quer oder unser einem beliebigen Winkel zum Hohlprofilstab verlegt und an diesem befestigt werden.

Die Erfindung wird anhand von in der Zeichnung dargestellten Ausführungsbeispielen näher erläutert. Es zeigt:

Fig. 1     einen Querschnitt eines aus einem Boden, zwei Kanalwänden und einem Deckel bestehenden Kabelkanalprofils,

Fig. 2     eine vergrößerte Darstellung einer Rastverbindung,

Fig. 3     einen Querschnitt einer weiteren Ausführungs form eines Kabelkanalprofils mit einem tragenden Hohlprofilstab,

Fig. 4a    bis 4h mehrere schematische Darstellungen von Kanalprofilquerschnitten und

Fig. 5a,    b Seitenansichten eines Kabelkanalprofils in den Richtungen a, b des
Profils der Fig. 3.

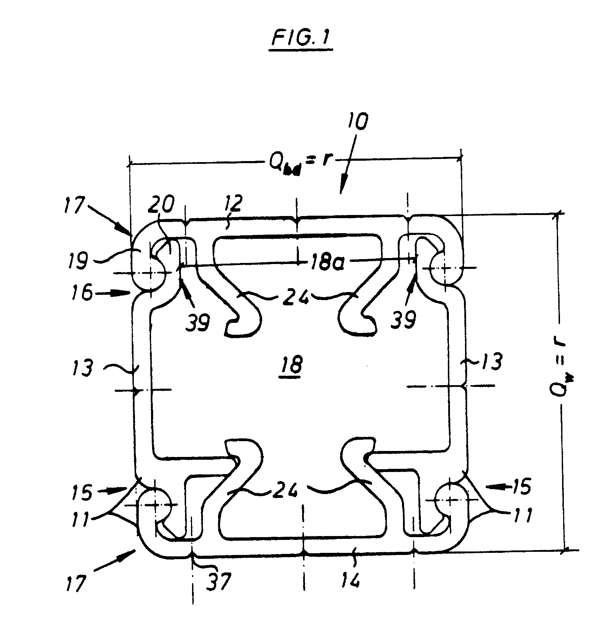

Das aus Festigkeitsgründen zweckmäßigerweise aus einer Leichtmetallegierung bestehende Kabelkanalprofil 10 der Fig. 1 hat einen Boden 14,
zwei daran befestigten Wände 13 und einen Deckel
12, die das Innere 18 des Kabelkanalprofils 10
umschließen, in dem z.B. elektrische Installationsleitungen verlegt werden. Der Boden 14 und die
Kanalwände 13 sind mit Rastverbindungen 15 zu
einem Kanalkörper 11 zusammengebaut, der zwischen den Enden 39 der Kanalwände 13 eine weite
Installationsöffnung 18a besitzt.

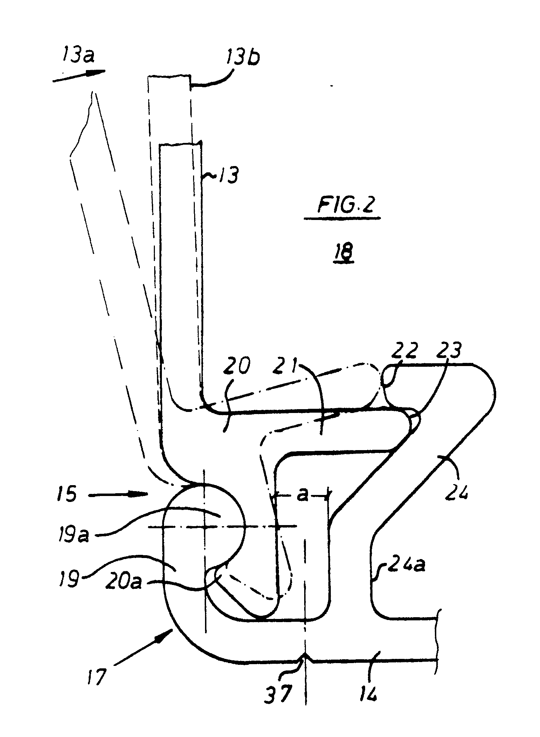

Die Kanalwand 13 hat gemäß Fig. 2 an ihrem
unteren, dem Boden 14 benachbarten Ende eine L-
förmige Hakenleiste 20, die in das Kanalinnere 18
hineinragt und mit ihrem langen L-Schenkel zu der
Wand 13 parallel verläuft. Dieser L-Schenkel bzw.
die Hakenleiste 20 hintergreift eine an der Außenkante 17 des Bodens 14 vorhandene Widerlagerleiste 19, die vom Boden 14 in Richtung der Kanalwand 13 vorspringt und mit dieser fluchtet. Infolgedessen ergibt sich zwischen den Außenkanten 17
des Kabelkanalprofils der Fig. 1 eine im wesentlichen glatte Außenfläche.

Die Widerlagerleiste 19 hat wandseitig eine
Wulst 19a, die in ihrem die Hakenleiste 20 berührenden Bereich kreisförmigen Querschnitt aufweist.
Dementsprechend ist die Hakenleiste 20 in ihrem
Berührungsbereich mit der Widerlagerleiste 19
ebenfalls kreisförmig profiliert. An ihrem bodenseitigen Ende hat die Hakenleiste 20 eine zur Widerlagerleiste 19 hin vorspringende Rippe 20a, mit der
die Wulst 19a hintergriffen wird. Infolgedessen ist
der Querschnitt der Hakenleiste 20 und der Widerlagerleiste 19 im Berührungsbereich beider kugelgelenkartig.

An der Hakenleiste 20 greift ein Drucksteg 21
an, der etwa senkrecht zur Kanalwand 13 angeordnet ist. Er sorgt dafür, daß die Hakenleiste 20 und
die Widerlagerleiste 19 in Eingriff kommen bzw.
bleiben. Hierzu wirkt er mit einem Raststegträger
24 zusammen, der einen Raststeg 22 und eine
Rastausnehmung 23 aufweist. Der Raststegträger
24 ist so ausgebildet und angeordnet, daß der
Drucksteg 21 in der Rastausnehmung 23 fest sitzt
und darin festgehalten wird. Dazu ist der Raststegträger 24 mit dem Boden 14 einstückig verbunden.
Er hat einen Teil 24a, der im Abstand a parallel
zum die Wulst 19a hintergreifenden Schenkel der
Hakenleiste 20 verläuft, dann etwa unter 45° von
der Senkrechten abweichend zur Mitte des Profilinneren 18 hin verläuft und mit einem waagerechten,
den Raststeg 22 bildenden Teil das freie Ende des
Druckstegs 21 hintergreift.

Der Zusammenbau der Rastverbindung 15 erfolgt derart, daß die Wand 13 zunächst in der strichpunktierten Lage angeordnet wird, in der die
Hakenleiste 20 auf der Wulst 19a so aufsitzt, daß
der Drucksteg 21 gegen den Raststeg 22 stößt.
Danach wird die Wand 13 in Pfeilrichtung 13a und
unter Überwindung des Raststegs 22 weitergeschwenkt, bis die Wand 13 ihre mit ausgezogenem
Strich dargestellte Lage einnimmt. Diese Lage kann
dadurch blockiert werden, daß zwischen der Hakenleiste 20 und dem Teil 24a des Raststegträgers
24 eine etwa a-starke Schraube angeordnet wird,
die durch eine mit Hilfe einer Anbohrhilfsrille 37
des Bodens 14 hergestellte Bohrung eingeschraubt
wird. Hierzu ist die Anbohrhilfsrille 37 in der Projektion zwischen der Hakenleiste 20 und dem Raststegträger 24 angeordnet.

Die gestrichelte Lage 13b der Kanalwand 13
deutet an, daß die Kanalwand 13 durch die Rastverbindung 15 nach außen vorgespannt wird, wenn
nicht der aus Fig. 1 ersichtliche Deckel 12 auf die
beiden Kanalwände 13 aufgesetzt ist. Dieser zieht
die vorgespannten Kanalwände 13 in die in Fig. 1
ersichtliche, mit ausgezogenen Strichen dargestellte Lage. Der Deckel 12 sitzt mittels der Rastverbindungen 16 auf den Enden 39 der Kanalwände 13,
kann also nur unter Lösen der Rastverbindungen
16 wieder entfernt werden. Wegen der Vorspannung der Kanalwände 13 ist im Bereich dieser
Rastverbindungen ein gemäß Rastverbindung 15
ausgebildeter Drucksteg nicht erforderlich. Es genügt vielmehr, daß die Haken- und die Widerlagerleisten 19, 20 gleich denen der Rastverbindung 15
ausgebildet sind.

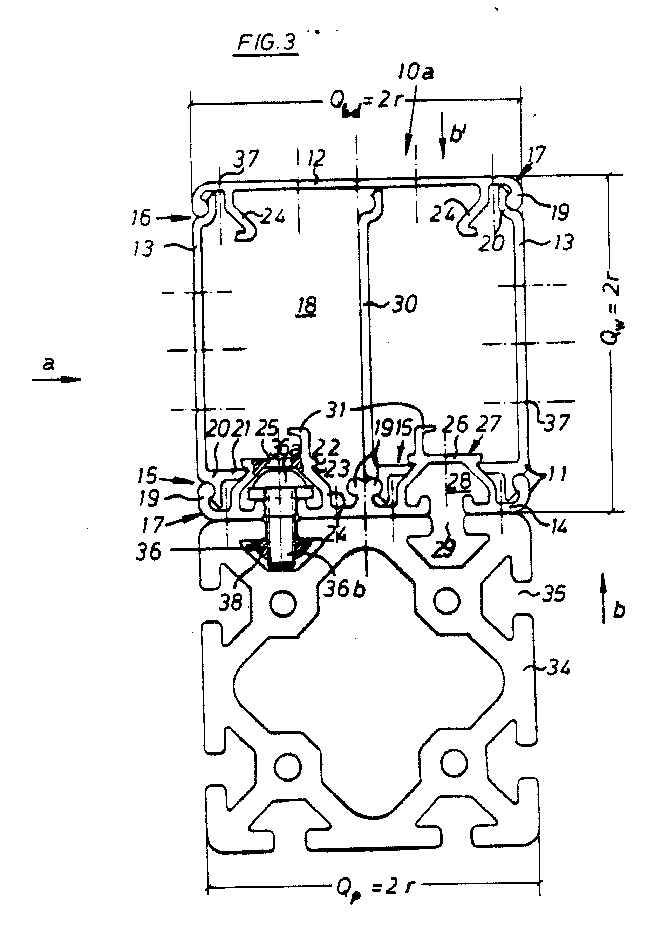

Fig. 3 zeigt ein Kabelkanalprofil 10a, dessen
Querschnittslängen $Q_w$ der Wände 13 und $Q_{bd}$ des
Bodens 14 bzw. des Deckels 12 doppelt so groß
sind, wie die entsprechenden Querschnittslängen
gemäß Fig. 1. Die Rastverbindungen 15, 16 sind
jedoch gleich ausgebildet und bemessen, wie auch
die benachbart angeordneten Raststegträger 24.
Der Deckel 12 hat lediglich zwei dieser Raststegträger. Der Boden 14 hat hingegen vier Raststegträger 24, von denen jeweils zwei benachbarte
spiegelbildlich angeordnet und durch einen Verbindungssteg 26 tragend miteinander zu einem Rinnenprofil 27 verbunden sind. Jedes Rinnenprofil 27
umschließt eine Befestigungsnut 28, die von außen
durch einen Befestigungsschlitz 29 zugänglich ist.
Ein als Schraube ausgebildetes Verbindungsteil 36
wird mit einem Schraubenkopf 36a in der Befestigungsnut 28 angeordnet, während der Schraubenschaft 36b des Verbindungsteils 36 den Be festigungsschlitz 29 durchragt.

Der Schraubenschaft 36b wird in die Gewindebohrung eines Klemmstücks 38 eingeschraubt, so
daß der Hohlprofilstab 34 und der Boden 14 zusammengezogen werden. Das Klemmstück 38 ist
ein sich senkrecht zur Darstellungsebene erstrek-
kender prismatischer Körper, der etwa Kreissegmentform hat. Der Querschnitt ist derart auf die Breite des Befestigungsschlitzes 29 abgestimmt, daß das Klemmstück 38 an jeder beliebigen Stelle des Hohlprofilstabs 34 durch den Befestigungsschlitz 29 in die in Fig. 3 dargestellte Lage gebracht werden kann. Das verbindungsteil 36 wird mit dem Schraubenkopf 36a von einem Ende der Befestigungsnut 28 her bis vor eine Betätigungsöffnung 25 im Verbindungssteg 26 geschoben. Durch die Betätigungsöffnung 25 wird beispielsweise ein Innenmehrkantschlüssel gesteckt und das Verbindungsteil 36 im Klemmstück 38 festgeschraubt. Da bei dem Kabelkanalprofil 10a zwei parallel verlaufende Rinnenprofile 27 vorhanden sind, kann diese Befestigung auch doppelt vorgenommen werden.

Beide Rinnenprofile 27 besitzen zum Innenraum 18 vorspringende Klemmenbefestigungsleisten 31, an denen Installationsklemmen festgelegt werden können, die in zur Darstellungsebene senkrechter Richtung auf diese Leisten 31 aufgeschoben werden. Die Leisten 31 sind L-förmig und gegenständig angeordnet, so daß bei Nichtvorhandensein der in Fig. 3 dargestellten Zwischenwand 30 auch solche normmäßigen Installationsklemmen verwendet werden können, die die beiden Leisten 31 C-förmig übergreifen.

Zwischen den Rinnenprofilen 27 sind zwei gegenständig angeordnete Hakenleisten 19 vorhanden, die mit ihren benachbarten Raststegträgern 24 Raststellen für die Zwischenwand 30 bilden. Die Zwischenwand 30 ist gleich einer Kanalwand 13 profiliert, so daß sie gemäß Fig. 3 eine Rastverbindung 15 bilden kann und bei der aus Fig. 3 ersichtlichen Anordnung den Innenraum 18 wie ersichtlich unterteilt.

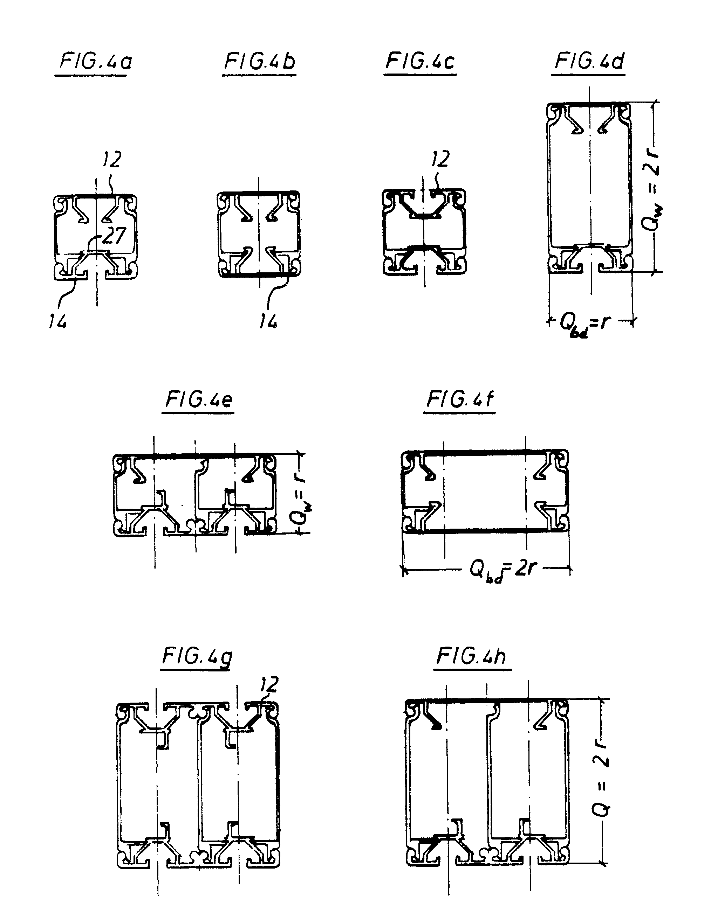

Aus den Fig. 4a bis 4h wird noch besser deutlich, daß das Kabelkanalprofil aus baukastenartig ausgestalteten Bestandteilen aufgebaut werden kann. Hierzu ist davon auszugehen, daß die Querschnittslängen $Q_{bd}$, $Q_w$ gemäß Fig. 1 jeweils gleich einem Rastermaß r sind, also im Verhältnis 1 : 1 stehen. Kabelkanalprofile mit gleicher Querschnittsform zeigen die Fig. 4a bis 4c. Bei dem Querschnitt der Fig. 4d ist $Q_{bd}$ zwar = r, jedoch $Q_w$ = 2r. Das Profil ist also schmal, aber tief. Demgegenüber sind die Profile der Fig. 4e,4f breit, aber entsprechend den Fig. 4a bis 4c flach. Die Profile der Fig. 4g, 4h sind entsprechend dem Profil der Fig. 3 ausgebildet, also mit $Q_{bd}$ = 2r und $Q_w$ = 2r. Die Flächeninhalte der Profile der Fig. 4a bis 4c und 4d bis 4f sowie 4g,4h stehen im Verhältnis 1 : 2 : 4. Durch eine derartige Verrasterung der Querschnittslängen bzw. der Querschnittsflächen der möglichen Kabelkanalprofile wird ein sehr vielfältig einsetzbares Baukastensystem geschaffen, das mit vergleichsweise wenig Bestandteilen auskommt und infolgedessen sehr vielseitig und preiswert ist.

Das Profil der Fig. 4a hat einen Boden 14 mit Rinnenprofil 27 zur Befestigung an dem Hohlstabprofil 34 der Fig. 3 oder einem ähnlichen Profil. Der Deckel 12 ist hingegen, gemäß Fig. 1 ausgebildet. Das Profil der Fig. 4b entspricht dem der Fig. 1, besitzt also ein Bodenteil 14 mit Deckelquerschnitt. Das Profil der Fig. 4c besitzt hingegen einen Deckel 12 mit Bodenquerschnitt. Das Profil der Fig. 4d entspricht bis auf seine doppelte Querschnittslänge $Q_w$ dem Profil der Fig. 4a, während das Profil der Fig. 4f bis auf seine doppelte Querschnittslänge $Q_{bd}$ dem Profil der Fig. 4b entspricht. Die Fig. 4e,4h sind bis auf ihre unterschiedlichen Querschnittslängen $Q_w$ = r bzw. = 2r gleich profiliert, nämlich gemäß Fig. 3, deren Querschnittslängen denen des Profils der Fig. 4g entsprechen das lediglich mit einem Bodenquerschnitt aufweisenden Deckel 12 abweicht. Die durch die Fig. 4a bis 4h veranschaulichten acht Kabelkanalprofile sind mit insgesamt nur sechs voneinander abweichend profilierten Teilen herstellbar, was die Universalität des Profilsystems veranschaulicht.

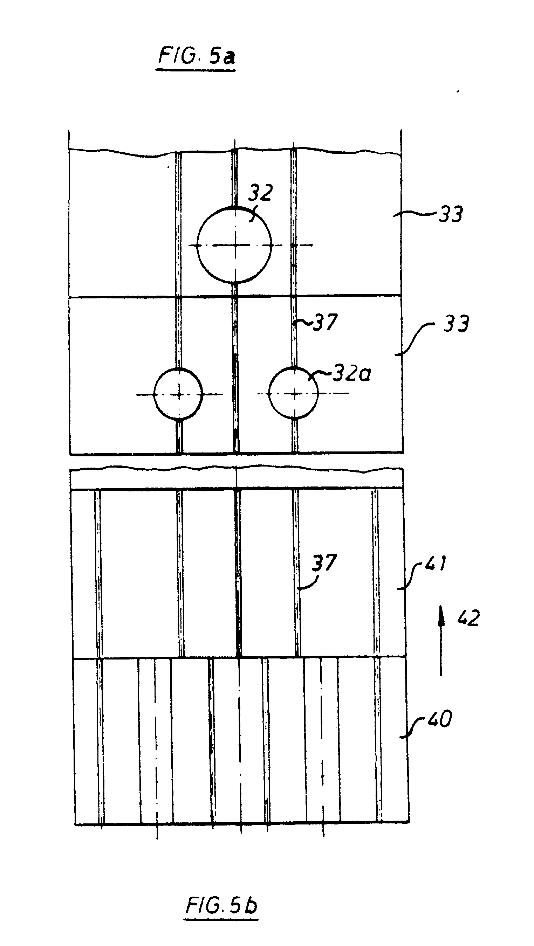

Das System bietet darüberhinaus noch den Vorteil, auch in der Längsrichtung der Kabelkanalprofile sehr anpassungsfähig zu sein. Fig. 5a zeigt in der Ansicht a der Fig. 3, daß in Längsrichtung abschnittsweise unterschiedlich ausgestaltete Wandabschnitte 33 der Kanalwand 13 angeordnet werden können, die beispielsweise eine Seitenaustrittsöffnung 32 oder zwei Belüftungsöffnungen 32a aufweisen. Wird ein derartiger Kanalwandabschnitt 33 nicht mehr benötigt, so kann er entfernt und durch einen gewünschten Ersatzabschnitt ersetzt werden.

Fig. 5b zeigt in der Ansicht b der Fig. 3 in Längsrichtung 42 einen Kanalwandabschnitt 40 mit Bodenquerschnitt gemäß Fig. 3 und daran anschließend einen Kanalabschnitt 41 mit Deckelquerschnitt, wobei fünf Anbohrhilfsrillen 37 vorhanden sind, wie sich aus der Ansicht b' gemäß Fig. 3 ergibt.

Bei einer derartigen rasterartigen Ausbildung der Kabelkanalprofile ist es vorteilhaft, wenn die Hohlprofilstäbe 34, an denen die Kabelkanalprofile 10 befestigt werden, ebenfalls entsprechend bemessene Quer schnittslängen aufweisen, wie sich aus Fig. 3 ergibt. Aus dieser Figur ist ersichtlich, daß die beiden in Rede stehenden Querschnitte jeweils gleich große Querschnittslängen haben. Es ist aber auch möglich, daß das Kabelkanalprofil 10 bzw. 10a oder der Hohlprofilstab 34 voneinander abweichend rasterartig ausgebildet sind, also z.B. $Q_P$ = r und $Q_{bd}$ = 2r.

## Ansprüche

1. Kabelkanalprofil (10,10a) zur Verlegung von Installationsleitungen od.dgl., mit einem U-förmigen Kanalkörper (11), der aus einem Boden (14) und zwei damit lösbar verbundenen Kanalwänden (13) besteht, und mit einem die von den Kanalwänden (13) gebildete Installationsöffnung verschließenden abnehmbaren Deckel (12), der an den Enden der Kanalwände insbesondere außen befestigt ist, wobei der Boden (14), die Wände (13) und der Deckel (12) ein Baukastensystem bilden, **dadurch gekennzeichnet**, daß die Baukastenelemente Boden (14), Wände (13) und Deckel (12) unterschiedlich dimensioniert vorhanden sind und daß die Querschnittslängen ($Q_{bd}$, $Q_w$) des Kabelkanalprofils (10,10a) mit einem Rastermaß (r) im Verhältnis 1:1 oder einem ganzzahligen Vielfachen stehen.

2. Kabelkanalprofil nach Anspruch 1, **dadurch gekennzeichnet**, daß die Verbindung der Kanalwände (13) und des Bodens (14) über Rastverbindungen (15) erfolgt und/oder daß der Deckel (12) an den Kanalwänden (13) über Rastverbindungen (16) austauschbar befestigt ist und/oder daß eine Kanalwand (13) von mindestens einer Rastverbindung (15) im Sinne einer Verspannung einer anderen Rastverbindung (16) oder einer sonstigen lösbaren Verbindung eines Kanalteils mit einem anderen Kanalteil vorspannbar ist.

3. Kabelkanalprofil nach Anspruch 1 oder 2, **dadurch gekennzeichnet**, daß der Boden (14) des Kanalkörpers (11) und/oder dessen Deckel (12) an ihren Außenkanten (17) in die Richtung der kanalwände (13) weisende Widerlagerleisten (19) haben, die von in das Kanalinnere (18) vorspringenden Hakenleisten (20) hintergriffen sind und/oder daß die Hakenleisten (20) einer Rast verbindung (15) einer Kanalwand (13) einen Drucksteg (21) aufweisen, der beim Verhaken der zusammenwirkenden Haken- und Widerlagerleisten (20, 19) unter Überwindung eines Raststegs (22) in eine Rastausnehmung (23) einrastbar ist und/oder daß die Haken- und Widerlagerleisten (20, 19) kugelgelenkartigen Querschnitt aufweisen und/oder daß die Widerlagerleisten (19) des Bodens (14) und des Deckels (12) sowie die Hakenleisten (20) der Kanalwände (13) in ihrem Eingriffsbereich jeweils gleich ausgebildet sind.

4. Kabelkanalprofil nach einem der Ansprüche 1 bis 3, **dadurch gekennzeichnet**, daß der Boden (14) und der Deckel (12) des Kabelkanals (10, 10a) für jede Rastverbindung (15, 16) einen in das Kanalinnere vorspringenden Raststegträger (24) mit je einer Rastausnehmung (23) und einem Raststeg (22) aufweisen und/oder daß die Raststegträger (24) des Bodens (14) mit einem bedarfsweise Betätigungsöffnungen (25) aufweisenden Verbindungssteg (26) tragend miteinander zu einem Rinnenprofil (27) verbunden sind und daß im Boden (14) ein längsdurchlaufender, in eine von dem RinnenProfil (27) umschlossene Befestigungsnut (28) mündender Befestigungsschlitz (29) angeordnet ist.

5. Kabelkanalprofil nach einem der Ansprüche 1 bis 4, **dadurch gekennzeichnet**, daß der Boden (14) mindestens zwei nebeneinander angeordnete Rinnenprofile (27) hat, zwischen denen zwei auf deren Raststegträger (24) abgestimmte Widerlagerleisten (19) angeordnet sind.

6. Kabelkanalprofil nach einem der Ansprüche 1, bis 5, **dadurch gekennzeichnet**, daß das Kanalinnere (18) von einer Zwischenwand (30) unterteilt ist, die mit dem Boden (14) über eine Rastverbindung (15) lösbar verbunden ist und/oder daß die Zwischenwand (30) und die Kanalwände (13) gleich ausgebildet sind.

7. Kabelkanalprofil nach einem der Ansprüche 1 bis 6, **dadurch gekennzeichnet**, daß der Boden (14) des Kanalkörpers (11) Deckelquerschnitt oder der Deckel (12) Bodenquerschnitt hat und/oder daß der Boden (14) des Kanalkörpers (11) Klemmenbefestigungsleisten (31) aufweist.

8. Kabelkanalprofil nach einem der Ansprüche 1 bis 7, **dadurch gekennzeichnet**, daß in der Längsrichtung des Kabelkanals (10, 10a) längenabschnittweise ein Deckelquerschnitt anstelle eines Bodenquerschnitts vorhanden ist und/oder daß in der Längsrichtung des Kabelkanals (10, 10a) mindestens ein mit mindestens einer Seitenaustrittsöffnung-und/oder Belüftungsöffnung (32, 32a) versehener separater Kanalwandabschnitt (33) vorhanden ist.

9. Kabelkanalprofil nach einem der Ansprüche 1 bis 8, **dadurch gekennzeichnet**, daß es mit einem Hohlprofilstab (34) lösbar verbunden ist, dessen Querschnittslängen ($Q_p$ ) auf die des Kabelkanals (10, 10a) abgestimmt sind und der mindestens einen mit dem Befestigungsschlitz (29) des Kabelkanals (10, 10a) deckungsgleich angeordneten Befestigungskanal (35) zur Aufnahme eines Verbindungsteils (36) aufweist.

**Claims**

1. Cable duct section (10, 10a) for the laying of service supply lines or the like, comprising a U-shaped channel member (11) which has a base (14) and two duct walls (13) releasably connected to the base, and comprising a removable cover (12) which closes the installation opening defined by the duct walls (13) and which is fixed, at the outside, to the ends of the duct walls, wherein the base (14), the walls (13) and the cover (12) form a prefabricated system, characterised in that the prefabricated base (14), wall (13) and cover (12) components are provided variously dimensioned and in that the lengths ($Q_{bd}$, $Q_w$) of the cable duct section (10, 10a) in the two cross-sectional directions which have a unit dimension (r) are in the ratio 1:1 or whole number multiples thereof.

2. Cable duct section according to claim 1, characterised in that the connection of the duct walls (13) and of the base (14) is effected by latch connections (15) and/or that the cover (12) is exchangeably secured to the duct walls (13) by latch connections (16) and/or that one duct wall (13) can be pre-stressed by at least one latch connection (15) in the sense of a pre-stressing of another latch connection (16) or of another releasable connection of one duct portion with another duct portion.

3. Cable duct section according to claim 1 or 2, characterised in that the base (14) of the channel member (11) and/or its cover (12) has abutment strips (19) at its outer edges (17) extending in the direction towards the duct walls (13), wherein the abutment strips are engageable with hook portions (20) which project into the interior (18) of the duct and/or that the hook portion (20) of a latch connection (15) of a duct wall (13) comprises a snap arm (21) which is latchable in a latching recess (23) upon the hooking together of the cooperating hook and abutment portions (20, 19) and by overcoming the resistance of a latching tongue (22), and/or that the hook portion and abutment strip (20, 19) have a cross-section corresponding to a ball joint and/or that the abutment strip (19) of the base (14) and of the cover (12) as well as the hook portions (20) of the duct walls (13) are constructed in like manner in their engagement zones.

4. Cable duct section according to one of claims 1 to 3, characterised in that the base (14) and the cover (12) of the cable duct (10, 10a) for each latch connection (15, 16) include a latch member (24) which projects into the interior of the duct and which includes a latching recess (23) and a snap arm (22) and/or that the latch members (24) of the base (14) are connected together by a connecting web (26) thereby to define a channel member (27) with the web having an actuating hole (25) as required therethrough, and in that in the base (14) there is provided a longitudinally extending fixing slot (29) which opens into a fixing groove (28) which is enclosed by the channel member (27).

5. Cable duct section according to one of claims 1 to 4, characterised in that the base (14) has at least two channel members (27) arranged next to each other and between which are arranged two abutment strips (19) which are spaced from its latch members (24).

6. Cable duct section according to one of claims 1 to 5, characterised in that the interior (18) of the duct is divided by a dividing wall (30) which is releasably connected to the base (14) by means of a latch connection (15) and/or that the dividing wall (30) and the duct walls (13) are formed in like manner.

7. Cable duct section according to one of claims 1 to 6, characterised in that the base (14) of the channel member (11) has the cross-section of the cover or the cover (12) has the cross-section of the base and/or that the base (14) of the channel member (11) includes clamping fixing strips (31).

8. Cable duct section according to one of claims 1 to 7, characterised in that a cover cross-section element is provided instead of a base cross-section element as one section along the length of the sectional cable duct (10, 10a) and/or that along the length of the cable duct (10, 10a) at least one separate duct wall section (33) is provided having at least one side entry hole and/or ventilation hole (32, 32a).

9. Cable duct section according to one of claims 1 to 8, characterised in that it is detachably connected to a hollow profiled rod (34) whose cross-sectional dimensions ($Q_p$) are matched to the dimensions of the cable duct (10, 10a) and which includes at least one fixing channel (35) for receiving a connecting piece (36), with the fixing channel being aligned with the fixing slot (29) of the cable duct (10, 10a).

**Revendications**

1. Profilé de canal pour câbles (10, 10a) destiné à la pose de lignes d'installation ou similaires, comportant un corps de canal (11) en U formé d'un fond (14) et de deux parois de canal (13) reliées à celui-ci de façon amovible, et un couvercle amovible (12) fermant l'ouverture d'installation formée par les parois du canal (13), lequel couvercle (12) est fixé aux extrémités des parois de canal, en particulier à l'extérieur, le fond (14), les parois (13) et le couvercle (12) formant un système de blocs de construction, caractérisé en ce que les éléments formant blocs de construction formés par le fond (14), les parois (13) et le couvercle (12) existent dans des dimensions différentes et en ce que les longueurs des sections transversales ($Q_{bd}$, $Q_w$) du profilé de canal pour câbles (10, 10a) présentent une dimension modulaire (r) suivant un rapport de 1:1 ou d'un multiple entier.

2. Profilé de canal pour câbles selon la revendication 1, caractérisé en ce que la liaison entre les parois de canal (13) et le fond (14) se fait par l'intermédiaire de liaisons par encliquetage (15) et/ou en ce que le couvercle (12) est fixé aux parois de canal (13) de façon interchangeable par l'intermédiaire de liaisons par encliquetage (16) et/ou en ce qu'une paroi de canal (13) est apte à être précontrainte par au moins une liaison par encliquetage (15) dans le sens d'une déformation d'une seconde liaison par encliquetage (16) ou d'une autre liaison amovible d'une partie de canal avec une autre partie de canal.

3. Profilé de canal pour câbles selon la revendication 1 ou 2, caractérisé en ce que le fond (14) du corps de canal (11) et/ou son couvercle (12) présente au niveau de ses bords extérieurs (17) des rebords de butée (19) qui sont orientés en direction des parois de canal (13) et avec lesquels viennent en contact par l'arrière des rebords en crochet (20) faisant saillie à l'intérieur (18) du canal, et/ou en ce que les rebords en crochet (20) d'une liaison par encliquetage (15) d'une paroi de canal (13) présentent une barrette de pression (21) apte à s'encliqueter dans une cavité d'encliquetage (23), en franchissant à force une barrette d'encliquetage (22), lors du verrouillage du rebord en crochet et du rebord de butée (20, 19) coopérants, et/ou en ce que le rebord en crochet et le rebord de butée (20, 19) possèdent une section transversale d'articulation sphérique, et/ou en ce que les rebords de butée (19) du fond (14) et du couvercle (12) ainsi que les rebords en crochet (20) des parois de canal (13) sont conçus de la même façon dans leur zone de contact.

4. Profilé de canal pour câbles selon l'une des revendications 1 à 3, caractérisé en ce que le fond (14) et le couvercle (12) du canal pour câbles (10, 10a) présentent pour chaque liaison par encliquetage (15, 16) un support de barrette d'encliquetage (24) faisant saillie à l'intérieur du canal et comportant respectivement une cavité d'encliquetage (23) et une barrette d'encliquetage (22), et/ou en ce que les supports de barrette d'encliquetage (24) du fond (14) sont reliés entre eux de façon porteuse, pour former un profilé en forme de gouttière (27), à l'aide d'une barrette de liaison (26) possédant le cas échéant des ouvertures d'actionnement (25), et en ce qu'il est prévu dans le fond (14) une fente de fixation (29) s'étendant longitudinalement et débouchant dans une rainure de fixation (28) entourée par le profilé en forme de gouttière (27).

5. Profilé de canal pour câbles selon l'une des revendications 1 à 4, caractérisé en ce que le fond (14) est pourvu d'au moins deux profilés en forme de gouttières (27) disposés l'un à côté de l'autre et entre lesquels sont prévus deux rebords de butée (19) ajustés en fonction de leurs supports de barrette d'encliquetage (24).

6. Profilé de canal pour câbles selon l'une des revendications 1 à 5, caractérisé en ce que l'intérieur (18) du canal est subdivisé à l'aide d'une cloison (30) qui est reliée de façon amovible au fond (14) par l' intermédiaire d'une liaison par encliquetage (15), et/ou en ce que la cloison (30) et les parois de canal (13) sont conçues de façon identique.

7. Profilé de canal pour câbles selon l'une des revendications 1 à 6, caractérisé en ce que le fond (14) du corps de canal (11) présente la section transversale du couvercle ou le couvercle (12) présente la section transversale du fond, et/ou en ce que le fond (14) du corps de canal (11) possède des barrettes de fixation de serre-fils (31).

8. Profilé de canal pour câbles selon l'une des revendications 1 à 7, caractérisé en ce que dans le sens longitudinal du profilé de canal pour câbles (10, 10a), il est prévu, par segments longitudinaux, une section transversale de couvercle au lieu d'une section transversale de fond, et/ou en ce que, dans le sens longitudinal du canal pour câbles (10, 10a), il y a au moins un segment de paroi de canal (33) séparé pourvu d'au moins une ouverture d'évacuation latérale et/ou d'aération (32, 32a).

9. Profilé de canal pour câbles selon l'une des
revendications 1 à 8, caractérisé en ce qu'il
est relié de façon amovible à une barre profilée creuse (34) dont les longueurs de sections
transversales ($Q_p$) sont ajustées en fonction de
celles du canal pour câbles (10, 10a) et qui
possède au moins un canal de fixation (35)
disposé de façon coïncidente avec la fente de
fixation (29) du canal pour câbles (10, 10a) et
destiné à recevoir une pièce de liaison (36).

## FIG. 1

FIG.2

18

FIG. 3

FIG.4a  FIG.4b  FIG.4c  FIG.4d

FIG.4e  FIG.4f

FIG.4g  FIG.4h

FIG. 5a

FIG. 5b